# FASCICULE DE BREVET EUROPEEN

(11) **EP 2 956 655 B1**
(45) Date de publication et mention de la délivrance du brevet: **01.04.2020**
(21) Numéro de dépôt: 14708632.6
(22) Date de dépôt: 13.02.2014
(51) Int. Cl.: F02K 9/80, F02K 9/97, F02K 1/00, F02K 9/84

(54) **TUYÈRE A DIVERGENT MOBILE AVEC SYSTÈME DE PROTECTION THERMIQUE**
DÜSE MIT BEWEGLICHEM DIVERGENTEM ABSCHNITT MIT WÄRMESCHUTZSYSTEM
NOZZLE WITH A MOVABLE DIVERGENT SECTION PROVIDED WITH A THERMAL PROTECTION SYSTEM

(30) Priorité: 15.02.2013 FR 1300337
(43) Date de publication de la demande: 23.12.2015
(73) Titulaire: ARIANEGROUP SAS, 75015 Paris (FR)
(72) Inventeur: BERDOYES, Michel, F-33610 Cestas (FR); REMIGI, Alain, F-Cestas 33610 (FR); LARRIEU, Jean-Michel, F-33460 Macau (FR)
(74) Mandataire: Cabinet Beau de Loménie
(86) Numéro de dépôt international: PCT/FR2014/050293
(87) Numéro de publication internationale: WO 2014/125221

(56) Documents cités:
- DE-A1- 3 119 183
- FR-A- 1 359 870
- FR-A1- 2 841 939
- FR-A1- 2 844 557
- US-A- 3 302 885
- US-A- 3 570 768
- US-A- 3 912 172
- US-A- 4 108 381

## Description

### Arrière plan de l'invention

La présente invention se rapporte aux tuyères à divergent mobile pour moteurs fusées. Le domaine d'application de l'invention est plus particulièrement, mais non exclusivement celui des missiles.

Une tuyère à divergent mobile met généralement en œuvre une liaison de type rotule ou sphère/sphère entre le col fixe et le divergent mobile de la tuyère. La technologie utilisant un divergent mobile pour orienter la poussée présente de nombreux avantages, à encombrement équivalent, par rapport aux autres technologies connues d'orientation de poussée telles que celles utilisant une tuyère orientable sur butée flexible, par exemple. En effet, les tuyères où seul le divergent est mobile présentent des capacités de déviation de poussée nettement supérieures à celles que l'on peut obtenir avec les tuyères orientables dans lesquelles toute la veine de tuyère est mobile. Cette amélioration de la déviation de poussée s'explique par la présence, dans la zone mobile du divergent et en configuration braquée, d'un champ de pression dissymétrique qui conduit à un coefficient d'amplification supérieur à 1 par rapport au seul effet géométrique. Cette technologie ainsi que ses avantages par rapport aux autres types de tuyères orientables sont décrits notamment dans le document US 6 948 307.

Cependant, dans ce type de tuyère, le col et la partie du divergent en contact glissant avec le col peuvent être soumis à des phénomènes thermo-érosifs importants. En effet, dans certaines conditions de braquage du divergent, les gaz de combustion peuvent présenter, en outre d'une température très haute, une vitesse circonférentielle très élevée (potentiellement sonique). Afin de résister à ces effets thermo-érosifs, les pièces constituant la liaison rotule sont réalisées en matériaux composites thermostructuraux qui sont connus pour leurs bonnes propriétés mécaniques et leur capacité à conserver ces propriétés à température élevée. Ils comprennent notamment les matériaux composites carbone/carbone (C/C) formés d'un renfort en fibres de carbone densifié par une matrice en carbone.

Les matériaux composites thermostructuraux sont des matériaux à hautes performances et ont, par conséquent, un coup de fabrication élevé.

En outre, dans le cas de l'utilisation de pièces en matériau composite C/C pour la liaison rotule, le coefficient de frottement de ces pièces augmente avec la température, ce qui demande une puissance d'activation plus importante pour braquer le divergent en cours de fonctionnement.

Or, il existe un besoin de disposer d'une solution permettant la réalisation d'une tuyère à divergent mobile à moindre coût de fabrication et d'énergie d'activation.

### Objet et description succincte de l'invention

A cet effet, la présente invention propose une tuyère, telle que celle revendiquée dans la revendication 1, à divergent mobile comprenant un col fixe formant une rotule et un divergent dont la partie supérieure est montée de façon mobile autour du col, une chambre de lubrification annulaire étant interposée entre le col et la partie supérieure du divergent, ladite chambre renfermant un joint de graisse, caractérisée en ce que ladite tuyère comprend en outre :
- un élément de laminage annulaire disposé entre le col et le divergent en aval de la chambre de lubrification, ledit élément de laminage étant en un matériau réfractaire,
- un élément de protection thermique annulaire disposé entre le col et le divergent en aval de la chambre de lubrification et en amont de l'élément de laminage, ledit élément de protection thermique fermant la chambre de lubrification dans sa partie inférieure.

Grâce à l'utilisation d'un système de protection thermique à deux niveaux de protection (laminage au plus près des gaz de combustion et barrière thermique en amont), la température des pièces constituant la liaison rotule, à savoir le col et la partie supérieure du divergent en contact glissant avec cette dernière, n'augmente pas au cours du fonctionnement de la tuyère, et ce même pour des durées de fonctionnement relativement longues (plusieurs minutes). On réalise ainsi une liaison rotule dite « froide » qui ne requière pas l'utilisation de matériaux destinés à résister à de très hautes températures, comme les matériaux composites thermostructuraux, qui sont par définition des matériaux couteux. Dans la tuyère de l'invention, les pièces formant la liaison rotule peuvent être réalisées avec des matériaux bas coût comme des matériaux métalliques.

En outre, la température des pièces de liaison n'augmentant pas en cours de fonctionnement de la tuyère, les pièces se dilatent peu et le coefficient de frottement reste faible en comparaison avec celui présent entre des pièces en matériau composite thermostructural soumises à de hautes températures. Par conséquent, dans la tuyère de l'invention, la puissance à fournir aux moyens d'actionnement (par exemple vérins) pour braquer le divergent est plus faible.

Par ailleurs, grâce à l'élément de laminage placé en aval de l'élément de protection thermique, le joint de graisse est parfaitement protégé des gaz de combustion et son maintien en position assuré. L'élément de protection thermique joue le rôle de barrière thermique vis-à-vis des gaz de combustion qui pourraient passer le premier niveau formé par l'élément de laminage mais en ayant simplement un effet de convection thermique car, au-delà de l'élément de laminage, les gaz ont une vitesse circonférentielle considérablement réduite.

Selon un premier aspect de l'invention, l'élément de laminage comprend une étoupe en fibres de carbone.

Selon un deuxième aspect de l'invention, l'élément de laminage comprend un anneau en matériau composite thermostructural choisi parmi au moins : matériau composite carbone/carbone et matériau composite à matrice céramique (CMC).

Selon un troisième aspect de l'invention, l'élément de protection thermique comprend un joint annulaire en graphite ou en polytétrafluoroéthylène (PTFE) chargé de graphite.

Selon un quatrième aspect de l'invention, le col est au moins partiellement en matériau métallique.

Selon un cinquième aspect de l'invention, les portions de col et de divergent en contact avec l'élément de laminage comprennent un matériau de protection thermique rigidimère.

L'invention a également pour objet un propulseur ou moteur fusée caractérisé en ce qu'il comprend une tuyère à divergent mobile selon l'invention.

### Brève description des dessins

L'invention sera mieux comprise à la lecture de la description faite ci-après, à titre indicatif mais non limitatif, en référence à la figure unique qui montre une tuyère à divergent mobile selon un mode de réalisation de l'invention.

### Description détaillée des modes de réalisation de l'invention

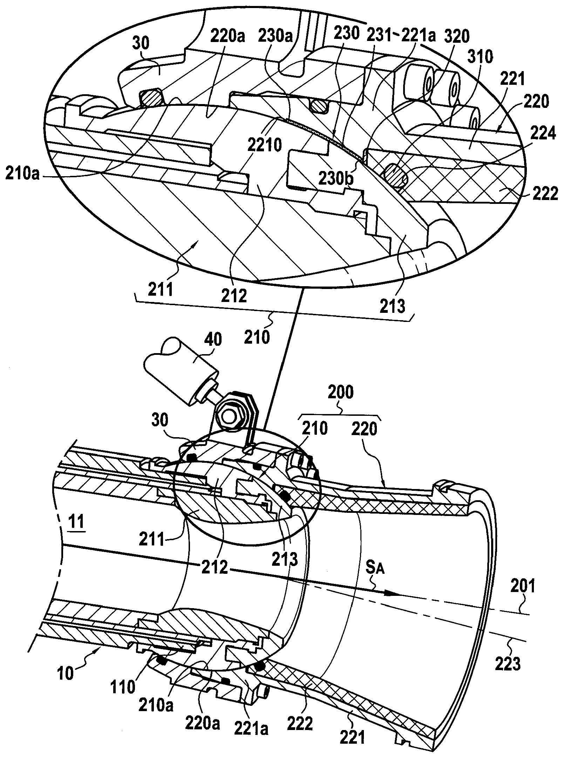

La figure unique illustre schématiquement la partie arrière d'un moteur fusée comprenant une enveloppe 10 entourant une chambre de combustion 11 dans laquelle est logé un bloc de propergol solide (non représenté). La chambre 11 s'ouvre à travers le fond arrière 110 de l'enveloppe en amont d'une tuyère 200 comprenant un col 210 et un divergent 220, le sens amont vers l'aval dans les tuyères étant indiqué sur la figure 1 par la flèche S_{A} correspondant au sens d'écoulement des gaz de combustion.

Le col 210, qui définit non seulement le col de tuyère proprement dit mais aussi le convergent et une amorce de divergent, est fixé par exemple par vissage au fond 110 de l'enveloppe 10 de manière à être solidaire de celui-ci. Dans l'exemple décrit ici, la pièce de col est constituée principalement par une première partie ou pièce de col 211 réalisée en un matériau thermostructural ou en un matériau composite isolant thermiquement de type rigidimère, une deuxième partie 212 réalisée en matériau métallique et une troisième partie 213 réalisée en matériau isolant thermiquement, tel qu'un composite de type rigidimère (par exemple un matériau formé d'un renfort carbone ou silice et d'une matrice en résine phénolique), la troisième partie 213 étant fixée sur la partie aval de la deuxième partie 212. Dans une variante de réalisation, la pièce de col 211 peut être réalisée en matériau métallique comme du tungstène ou du molybdène.

Le divergent 220 est monté de façon mobile au niveau de sa partie supérieure 221a sur le col 210 qui est fixe et solidaire de l'enveloppe 10. Dans l'exemple décrit ici, la pièce de divergent mobile comprend une enveloppe 221 qui peut être par exemple métallique munie sur sa partie interne d'un revêtement 222 en matériau isolant thermiquement tel qu'un composite de type rigidimère (par exemple un matériau formé d'un renfort carbone ou silice et d'une matrice en résine phénolique).

Le col 210 et le divergent 220 sont en contact mutuel par des surfaces sphériques respectives 210a, 220a centrées sur l'axe 201 de la tuyère et forment ainsi une liaison articulée de type rotule ou sphère/sphère. Le divergent 220 est alors mobile sur le col 210 suivant plusieurs directions. Ainsi, en braquant le divergent, on oriente la poussée en fonction de l'angle formé entre l'axe 223 du divergent et l'axe 201 de la tuyère.

Le divergent mobile est relié à une partie fixe de la tuyère (non représentée) par l'intermédiaire d'une couronne 30 et de vérins 40 qui permettent de commander le braquage du divergent. Ce type de montage formant une tuyère à divergent mobile est bien connu en soi et ne sera pas décrit plus en détail. Un exemple de réalisation d'une telle tuyère est notamment décrit le document US 6 948 307.

D'autres types de montage et d'actionnement connus d'un divergent mobile sur une partie fixe de tuyère peuvent bien entendu être envisagés.

Une chambre de lubrification annulaire 230 renfermant un joint de graisse 231 est formée dans un interstice présent entre le col 210 et la partie supérieure 221a du divergent 220. La chambre de lubrification 230 est fermée dans sa partie supérieure 230a, c'est-à-dire en aval, par un épaulement 2210 formé dans l'enveloppe 221 du divergent et ouverte dans sa partie inférieure 230b, c'est-à-dire en amont, située au plus près de gaz de combustion éjectés par la pièce de col 210 et le divergent 220. Le joint de graisse permet à la fois de faciliter le mouvement de la liaison rotule entre le divergent et le col et d'assurer une étanchéité entre ces deux pièces.

Conformément à l'invention, la tuyère est en outre équipée d'un système de protection thermique et d'étanchéité qui comprend un élément de laminage constitué ici par une étoupe en fibres de carbone 310 logée dans une gorge annulaire 224 ménagée sur la surface interne du revêtement 222 du divergent 220 et une barrière thermique formée ici par un joint en graphite (Sigraflex®) 320 et située entre la chambre de lubrification 230 et l'élément de laminage.

L'étoupe 310 est disposée entre le col 210 et la partie supérieure 221a du divergent 220 en aval de la chambre de lubrification 230. Le joint en graphite 320 est disposé entre le col et le divergent en amont de l'étoupe 310. Le joint 320 ferme la partie inférieure 230b de la chambre de lubrification 230 contre laquelle il est placée et assure ainsi le maintien en position du joint de graisse 231.

L'étoupe 310 permet de laminer les gaz de combustion qui, à cet endroit de la tuyère et dans certaines configurations de braquage du divergent, peuvent présenter une vitesse circonférentielle importante (potentiellement sonique) pouvant altérer l'intégrité du joint 320 et, par conséquent, celle du joint de graisse 231. Le joint 320 joue le rôle de barrière thermique vis-à-vis des gaz de combustion qui pourraient passer le premier niveau formé par l'étoupe mais qui n'ont plus à ce niveau qu'un effet de convection thermique car leur vitesse circonférentielle a été considérablement réduite par l'étoupe 310. Le joint de graisse est ainsi parfaitement protégé des effets thermo-érosifs des gaz de combustion.

Grâce à l'utilisation d'un système de protection thermique à deux niveaux de protection (laminage au plus près des gaz de combustion et barrière thermique en amont), la température des pièces constituant la liaison rotule, à savoir le col et la partie supérieure du divergent en contact glissant avec cette dernière, n'augmente pas au cours du fonctionnement de la tuyère, et ce même pour des durées de fonctionnement relativement longue (plusieurs minutes). On réalise ainsi une liaison rotule dite « froide » qui permet d'utiliser pour les pièces de liaison des matériaux bas coût comme des matériaux métalliques qui sont moins couteux que les matériaux composites destinés à résister à de très hautes températures.

Dans l'exemple décrit ici, le système de protection thermique est renforcé par la réalisation d'une barrière de protection thermique supplémentaire au niveau des parties de col et du divergent directement exposées aux gaz de combustion, à savoir la partie 213 du col et le revêtement interne 222 du divergent, qui sont en matériau isolant thermiquement.

La tuyère à divergent mobile de l'invention peut être utilisée dans des propulseurs ou moteurs fusée à propulsion solide (propergol solide), liquide (propergol liquide) ou hybride (propergols solide et liquide).

## Revendications

1. Tuyère à divergent mobile comprenant un col fixe (210) formant une rotule et un divergent (220) dont la partie supérieure est montée de façon mobile autour du col (210), une chambre de lubrification annulaire (230) étant interposée entre le col (210) et la partie supérieure du divergent (220), ladite chambre renfermant un joint de graisse (231), **caractérisée en ce que** ladite tuyère comprend en outre :
- un élément de laminage annulaire (310) disposé entre le col (210) et le divergent (220) en aval de la chambre de lubrification (230), ledit élément de laminage étant en un matériau réfractaire,
- un élément de protection thermique annulaire (320) disposé entre le col (210) et le divergent (220) en aval de la chambre de lubrification (230) et en amont de l'élément de laminage (310), ledit élément de protection thermique (320) fermant la chambre de lubrification (230) dans sa partie inférieure (230b), le sens amont vers aval correspondant au sens d'écoulement des gaz de combustion qui s'écoulent à travers le col en direction du divergent.

2. Tuyère selon la revendication 1, **caractérisée en ce que** l'élément de laminage (310) comprend une étoupe en fibres de carbone.

3. Tuyère selon la revendication 1, **caractérisée en ce que** l'élément de laminage (310) comprend un anneau en matériau composite thermostructural choisi parmi au moins : matériau composite carbone/carbone et matériau composite à matrice céramique.

4. Tuyère selon l'une quelconque des revendications 1 à 3, **caractérisée en ce que** l'élément de protection thermique (320) comprend un joint annulaire en graphite ou en polytétrafluoroéthylène (PTFE) chargé de graphite.

5. Tuyère selon l'une quelconque des revendications 1 à 4, **caractérisée en ce que** le col (210) est au moins partiellement en matériau métallique.

6. Tuyère selon l'une quelconque des revendications 1 à 5, **caractérisée en ce que** les portions de col (213) et de divergent (222) en contact avec l'élément de laminage comprennent un matériau de protection thermique rigidimère.

7. Propulseur **caractérisé en ce qu'**il comprend une tuyère à divergent mobile selon l'une des revendications 1 à 6.

## Patentansprüche

1. Düse mit beweglichem divergentem Abschnitt, umfassend einen festen Hals (210), der ein Kugelgelenk bildet, und einen divergenten Abschnitt (220), dessen oberer Teil beweglich um den Hals (210) herum montiert ist, wobei eine ringförmige Schmierkammer (230) zwischen dem Hals (210) und dem oberen Teil des divergenten Abschnitts (220) angeordnet ist, wobei die Kammer eine Fettdichtung (231) enthält, **dadurch gekennzeichnet, dass** die Düse ferner umfasst:
- ein ringförmiges Rollelement (310), das zwischen dem Hals (210) und dem divergenten Abschnitt (220) stromabwärts der Schmierkammer (230) angeordnet ist, wobei das Rollelement aus einem feuerfesten Material besteht,
- ein ringförmiges Wärmeschutzelement (320), das zwischen dem Hals (210) und dem divergenten Abschnitt (220) stromabwärts der Schmierkammer (230) und stromaufwärts des Rollelements (310) angeordnet ist, wobei das Wärmeschutzelement (320) die Schmierkammer (230) in ihrem unteren Teil (230b) verschließt, wobei die Richtung von stromaufwärts nach stromabwärts der Strömungsrichtung der Verbrennungsgase entspricht, die durch den Hals zu dem divergenten Abschnitt strömen.

2. Düse nach Anspruch 1, **dadurch gekennzeichnet, dass** das Rollelement (310) ein Werg aus Kohlenstofffasern umfasst.

3. Düse nach Anspruch 1, **dadurch gekennzeichnet, dass** das Rollelement (310) einen thermostrukturellen Verbundwerkstoffring umfasst, der ausgewählt ist aus mindestens: Kohlenstoff/Kohlenstoff-Verbundwerkstoff und Keramikmatrix-Verbundwerkstoff.

4. Düse nach einem der Ansprüche 1 bis 3, **dadurch gekennzeichnet, dass** das Wärmeschutzelement (320) eine ringförmige Dichtung aus Graphit oder graphithaltigem Polytetrafluorethylen (PTFE) umfasst.

5. Düse nach einem der Ansprüche 1 bis 4, **dadurch gekennzeichnet, dass** der Hals (210) zumindest teilweise aus metallischem Material besteht.

6. Düse nach einem der Ansprüche 1 bis 5, **dadurch gekennzeichnet, dass** die Teile des Halses (213) und des divergierenden Abschnitts (222), die mit dem Rollelement in Kontakt stehen, ein starres Wärmeschutzmaterial umfassen.

7. Triebwerk, **dadurch gekennzeichnet, dass** es eine Düse mit beweglichem divergentem Abschnitt nach einem der Ansprüche 1 bis 6 umfasst.

## Claims

1. A nozzle having a movable diverging section, the nozzle comprising a stationary throat (210) forming a ball joint and a diverging section (220) having a top portion that is movably mounted around the throat (210), an annular lubrication chamber (230) being interposed between the throat (210) and the top portion of the diverging section (220), said chamber containing a grease seal (231), said nozzle being **characterized in that** it further comprises:
• an annular throttling element (310) arranged between the throat (210) and the diverging section (220) downstream from the lubrication chamber (230), said throttling element being made of refractory material; and
• an annular thermal protection element (320) arranged between the throat (210) and the diverging section (220) downstream from the lubrication chamber (230) and upstream from the throttling element (310), said thermal protection element (320) closing the lubrication chamber (230) in its bottom portion (230b), the upstream to downstream direction corresponding to the flow direction of the combustion gas that flows through the throat towards the diverging section.

2. A nozzle according to claim 1, **characterized in that** the throttling element (310) comprises a gland made of carbon fibers.

3. A nozzle according to claim 1, **characterized in that** the throttling element (310) comprises a ring of thermostructural composite material selected from at least: carbon/carbon composite material and ceramic matrix composite material.

4. A nozzle according to any one of claims 1 to 3, **characterized in that** the thermal protection element (320) comprises an annular gasket made of graphite or of graphite-filled polytetrafluoroethylene (PTFE).

5. A nozzle according to any one of claims 1 to 4, **characterized in that** the throat (210) is made at least in part out of a metal material.

6. A nozzle according to any one of claims 1 to 5, **characterized in that** the portions (213, 222) of the throat and of the diverging section that are in contact with the throttling element comprise a rigidimer thermal protection material.

7. A thruster, **characterized in that** it includes a nozzle with a movable diverging section according to any one of claims 1 to 6.
